# FASCICULE DE BREVET EUROPEEN

(11) **EP 1 111 748 B1**
(45) Date de publication et mention de la délivrance du brevet: **28.11.2007**
(21) Numéro de dépôt: 00403592.9
(22) Date de dépôt: 19.12.2000
(51) Int. Cl.: H02B 13/035

(54) **Système d'interconnexion entre cellules électriques, à moyenne ou haute tension, en caissons**
Verbindungssystem zwischen Mittel- oder Hochspannungszellen
Interconnection system between medium or high voltage switchgear cubicles

(30) Priorité: 22.12.1999 FR 9916245
(43) Date de publication de la demande: 27.06.2001
(73) Titulaire: Areva T&D SA, 92084 Paris La Défense (FR)
(72) Inventeur: Starck, Thierry, 34160 Castries (FR)
(74) Mandataire: Poulin, Gérard

(56) Documents cités:
- EP-A- 0 199 249
- FR-A- 2 115 319

## Description

L'invention concerne un système d'interconnexion entre cellules électriques, à moyenne ou haute tension, logées dans des caissons hermétiques, blindés et à isolement gazeux, qui comportent des traversées de courant étanches dont les conducteurs axiaux respectifs ont chacun une extrémité de raccordement extérieurement accessible. Ce système est destiné à assurer l'interconnexion entre des conducteurs appartenant à deux cellules voisines, lorsque les conducteurs d'une cellule sont alignés avec ceux de l'autre, de telle sorte qu'un conducteur d'une cellule soit aligné avec un conducteur d'une cellule adjacente et que les extrémités de raccordement externe des conducteurs de cellules adjacentes qui sont alignés par paire soient proches.

Un système de ce genre est notamment décrit dans un brevet européen EP-0520933, les traversées de courant, qui sont portées par deux caissons voisins et qui ont leurs conducteurs axiaux alignés, comportent chacune un évidement tronconique débouchant vers l'extérieur du caisson porteur. Un manchon de liaison extérieurement biconique, réalisé en un matériau élastomère, entoure un dispositif d'interconnexion chargé de relier électriquement entre eux les conducteurs axiaux des traversées. Ce manchon est comprimé entre les deux traversées avec chacune desquelles il forme un joint d'étanchéité d'allure tronconique. Le dispositif d'interconnexion est constitué par des pièces conductrices dont les extrémités sont extérieurement appliquées par des ressorts périphériques autour des extrémités de raccordement externe des deux conducteurs axiaux à interconnecter. L'interconnexion entre les extrémités de raccordement externe de conducteurs alignés par paire de deux caissons voisins est ainsi réalisé par l'intermédiaire de modules de système d'interconnexion qui comportent chacun un dispositif d'interconnexion logé dans une structure d'isolement électrique essentiellement constituée par un manchon, tel que décrit ci-dessus.

Le déplacement d'un caisson qui n'est pas en extrémité d'un ensemble formé par une succession de caissons alignés, interconnectés par l'intermédiaire de ce système, implique nécessairement un déplacement d'au moins un des caissons voisins, et l'extraction du manchon et du dispositif d'interconnexion de tous les modules entre le caisson à déplacer et les deux caissons adjacents. De plus, sauf à déplacer tous les caissons situés d'un côté d'un caisson à extraire, une telle extraction ne peut s'effectuer sans intervenir à l'intérieur d'au moins un caisson, sachant que celui-ci est rempli d'un gaz de protection qui ne doit généralement pas être relâché à l'extérieur.

Une demande de brevet allemand DE-19737429 décrit un système qui ne comporte pas les inconvénients que présente le système évoqué ci-dessus.

Les conducteurs axiaux alignés et à interconnecter que portent deux traversées montées sur des caissons adjacents ont leurs extrémités de raccordement qui saillent hors des caissons par un méplat longitudinal asymétrique. Un dispositif d'interconnexion est constitué par une pièce conductrice, de forme allongée, dont les extrémités sont munies de méplats complémentaires de ceux que portent les conducteurs, de manière à permettre une fixation par vis des méplats de la pièce sur ceux des conducteurs. Le montage et le démontage de la pièce qui est amovible, notamment en cas de remplacement d'un caisson, peuvent s'effectuer de l'extérieur, sans déplacement latéral des caissons adjacents. Bien entendu, une structure d'isolement électrique doit être associée à la pièce conductrice d'un dispositif d'interconnexion. Elle est prévue constituée d'une gaine isolante qui couvre la plus grande partie la pièce, mais pas ses extrémités, et de deux manchons qui se montent de part et d'autre de la gaine, qu'ils recouvrent partiellement. Ces manchons viennent se plaquer contre les traversées d'où saillent les extrémités de raccordement externe des conducteurs, afin d'assurer la continuité de l'isolement, ce qui entraîne une complexité certaine et l'utilisation d'un nombre élevé de pièces.

L'invention a pour objet un système d'interconnexion entre cellules électriques, à moyenne ou haute tension, logées dans des caissons hermétiques, blindés et à isolement gazeux, qui soit simple et de coût réduit, tant dans sa réalisation que dans sa mise en oeuvre, ce système n'impliquant ni manipulation de gaz, ni déplacement latéral de cellules voisines pour le remplacement d'une cellule située en une position intermédiaire entre les extrémités de l'alignement que forment les cellules.

Ce système d'interconnexion est prévu pour être constitué de modules, chaque module étant disposé entre deux cellules électriques moyenne ou haute tension logées dans des caissons hermétiques blindés à isolement gazeux qui comportent des traversées de courant isolantes et étanches, les conducteurs axiaux respectifs desdites traversées étant alignés deux à deux et possédant chacun une extrémité de raccordement extérieurement accessible, deux extrémités adjacentes de conducteurs axiaux de traversées voisines étant électriquement reliées entre elles par un dispositif d'interconnexion constitutif du système et entouré d'une structure d'isolement électrique d'allure tubulaire approximativement coaxiale aux conducteurs axiaux et constituée par un manchon isolant flexible et de longueur élastiquement adaptable, chaque extrémité annulaire d'un manchon étant fixée à une traversée de courant par des moyens de fixation amovibles.

Selon une caractéristique de l'invention, le manchon possède une partie centrale longitudinale qui comporte un repli annulaire saillant radialement pour procurer un effet de rappel élastique, et en ce que ledit manchon possède entre ladite partie centrale et au moins une de ses deux extrémités aplatie annulairement une zone longitudinale qui comporte un repli annulaire rentrant radialement pour que la surface intérieure dudit manchon soit localement en contact avec un conducteur axial au niveau de ladite zone, ladite surface intérieure étant recouverte d'une couche semi-conductrice mise au potentiel des conducteurs axiaux.

Selon une autre caractéristique de l'invention, chaque système d'interconnexion comporte un dispositif d'interconnexion monté déplaçable en translation, sur l'extrémité de raccordement externe d'un premier des conducteurs axiaux qui saille extérieurement d'une longueur légèrement inférieure à la distance séparant les traversées voisines propres à ces conducteurs, pour pouvoir partiellement se loger à l'intérieur d'une cavité ménagée à l'extrémité de raccordement externe de chacun des deux conducteurs axiaux alignés que ce dispositif permet alors de relier électriquement, l'extrémité de raccordement externe du premier conducteur axial comportant une cavité d'une profondeur choisie pour y permettre un retrait en translation du dispositif d'interconnexion conduisant à une interruption de la continuité électrique entre les deux conducteurs axiaux alignés.

Selon une première forme de réalisation de l'invention, le dispositif d'interconnexion d'un système est constitué par une douille dotée d'un corps cylindrique se prolongeant par une tige filetée venant se visser dans un alésage taraudé situé au fond d'une cavité d'extrémité, borgne et étagée, prévue pour la douille à l'extrémité de raccordement externe du premier des conducteurs axiaux à raccorder, le corps cylindrique de la douille restant en liaison électrique par l'intermédiaire de contacts glissants avec l'intérieur de l'étage de diamètre correspondant de la cavité, d'où il sort plus ou moins en fonction du vissage réalisé pour la douille, et l'extrémité de ce corps cylindrique de douille en saillie entrant en contact glissant avec une cavité borgne, de diamètre correspondant, ménagée à l'extrémité de raccordement externe du second des conducteurs axiaux dans laquelle ladite extrémité de corps cylindrique pénètre, lorsque le dévissage réalisé est suffisant et permet d'assurer une continuité électrique entre les deux conducteurs axiaux avec lesquels le corps cylindrique de douille est alors simultanément en contact.

Selon une première variante de l'invention, le dispositif d'interconnexion d'un système est constitué par un assemblage de deux demi-coquilles de contact accolées qui sont élastiquement écartées l'une de l'autre pour pouvoir venir séparément en contact avec les extrémités de raccordement externe de deux conducteurs axiaux à raccorder, dans la cavité d'extrémité, borgne, que comporte chacun de ces conducteurs, depuis une position de rapprochement entre demi-coquilles qui permet leur pénétration dans les dites cavités d'extrémité et qui est obtenue par l'action d'une vis, les deux demi-coquilles étant montées sur la tige de cette vis par l'intermédiaire duquel elles sont rendues solidaires du premier conducteur axial. L'assemblage est longitudinalement déplaçable à l'extrémité de raccordement externe, largement saillante, du premier conducteur axial, entre une position permettant aux deux demi-coquilles d'être maintenues en contact avec les conducteurs axiaux dans les cavités desquels elles sont partiellement insérées et une position pour laquelle les deux demi-coquilles ne sont plus insérées que dans celle des cavités qui est ménagée à l'extrémité de raccordement externe du premier conducteur axial.

Selon une seconde variante de l'invention, le dispositif d'interconnexion est constitué par un assemblage de deux demi-coquilles de contact accolées qui sont élastiquement écartées l'une de l'autre pour pouvoir venir séparément en contact avec deux conducteurs axiaux à raccorder, de type tube creux, à une extrémité de raccordement externe du tube que forme chacun de ces conducteurs, depuis une position de rapprochement entre demi-coquilles qui permet leur pénétration dans les extrémités voisines des deux tubes et qui est obtenue par vissage d'une vis. Les demi-coquilles sont montées sur la tige de la vis par l'intermédiaire duquel elles sont rendues solidaires d'une extrémité de raccordement externe du tube du premier conducteur axial qui saille extérieurement d'une longueur correspondant à la distance séparant les deux traversées voisines prévues chacune pour le passage de l'un des tubes. L'assemblage est longitudinalement déplaçable à l'extrémité de raccordement externe du tube du premier conducteur axial, entre une position permettant aux deux demi-coquilles d'être maintenues en contact avec les deux tubes dans lesquels elles sont partiellement insérées et une position pour laquelle les deux demi-coquilles ne sont plus insérées que dans l'extrémité de raccordement externe, largement saillante, du tube formant le premier conducteur axial.

L'invention, ses caractéristiques et ses avantages sont précisés dans la description qui suit en liaison avec les figures évoquées ci-dessous.

Les figures 1 et 2 présentent un système d'interconnexion entre deux conducteurs axiaux alignés de traversées de courant montées sur deux caissons voisins, en coupe axiale, les conducteurs étant respectivement interconnectés sur la figure 1 et déconnectés sur la figure 2.

Les figures 3 et 4 présentent une première variante de système d'interconnexion entre conducteurs axiaux alignés, à cavité borgne d'extrémité, par dispositif à demi-coques de contact, vue en coupe, les conducteurs étant respectivement interconnectés sur la figure 3 et déconnectés sur la figure 4.

La figure 5 présente une vue latérale montrant le dispositif à demi-coques de contact en contact à l'intérieur d'une cavité d'extrémité d'un des conducteurs.

Les figures 6, 7, 8 présentent une seconde variante de système d'interconnexion entre conducteurs axiaux alignés, de type tube creux, par dispositif à demi-coques de contact, vue en coupe, les conducteurs étant respectivement interconnectés sur la figure 6 et déconnectés sur la figure 7

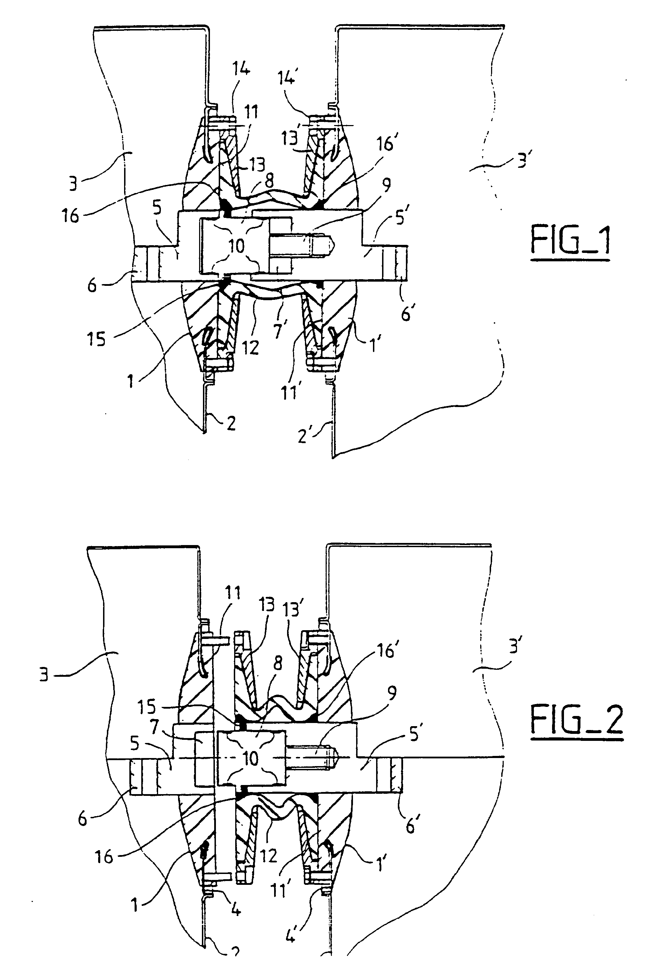

L'ensemble présenté sur la figure 1 montre deux traversées de courant 1, 1', étanches montées sur deux parois parallèles adjacentes 2, 2' de deux caissons 3, 3' voisins et de type caisson blindé, hermétique, rempli de gaz isolant, dans lesquels sont montés des équipements électriques et plus particulièrement des équipements à moyenne ou haute tension. Les traversées réalisées en matériau isolant, sont ici supposées surmoulées chacune sur un élément porteur 4 ou 4', métallique, qui se soude dans une ouverture complémentaire prévue pour lui dans une des parois. Un conducteur 5, 5', ici supposé du genre insert, traverse axialement chaque traversée et offre une extrémité de raccordement externe au caisson et une extrémité de raccordement interne au caisson. Les conducteurs axiaux à raccorder sont supposés alignés par deux, de part et d'autre d'un vide laissé entre les deux parois voisines qui les portent et qui appartiennent à deux caissons adjacents. Le raccordement d'une paire de conducteurs axiaux alignés est réalisé de manière modulaire, chaque module comportant un dispositif d'interconnexion associé à une structure tubulaire d'isolement électrique pour deux conducteurs à raccorder.

Dans l'exemple présenté, sur les figures let 2, les extrémités de raccordement interne 6 et 6' des deux conducteurs axiaux 5, 5' à raccorder forment chacun une patte de raccordement, du type méplat longitudinal asymétrique comportant un trou transversal de fixation pour une patte complémentaire d'un équipement. Les extrémités de raccordement externe de ces conducteurs axiaux 5 et 5' comportent chacune une cavité d'extrémité 7 ou 7', respectivement visibles sur les figures 2 et 1, qui est dite borgne dans la mesure où elle comporte un fond, dans la réalisation présentée sur ces deux figures. Les cavités 7, 7' sont ici supposées d'allure cylindrique et elles sont prévues pour recevoir une douille conductrice 8 qui permet d'interconnecter les conducteurs 5 et 5' lorsqu'elle est positionnée de manière à être partiellement logée dans chacune des cavités 7, 7' qui s'ouvrent face à face. L'une des cavités 7, 7' est prévue plus profonde que l'autre de manière à recevoir plus profondément la douille 8 en lui permettant de sortir de l'autre cavité. Dans l'exemple de réalisation présenté, la douille comporte une tige filetée 9 qui vient se visser dans un alésage taraudé prévu au fond de la cavité 7' la plus profonde. Le vissage de la douille la fait rentrer dans la cavité 7' et son dévissage la fait sortir, la distance séparant les extrémités externes des conducteurs axiaux 5, 5' est choisie en liaison avec les dimensions longitudinales de la douille 8 pour permettre à celle-ci de pénétrer dans la cavité 7 du conducteur 5 avec lequel elle entre en contact après un dévissage minimal prédéterminé. Le contact électrique entre la douille 8 et chacune des contacts 5 et 5' à l'intérieur des cavités 7 et 7' est ici supposé assuré par l'intermédiaire de contacts glissants 10, bien connus en ce domaine de la connectique, qui sont périphériquement montés au voisinage des extrémités de la douille 8. Le déplacement axial du dispositif d'interconnexion que constitue ici la douille 8 est choisi de manière à permettre d'obtenir un contact satisfaisant avec le conducteur axial 5, lorsque la douille a atteint une position, dite d'interconnexion, pour laquelle elle est simultanément à l'intérieur des cavités 7 et 7' et établit une liaison électrique entre les conducteurs axiaux 5, 5'. Il est aussi choisi pour permettre à la douille de s'éloigner suffisamment de l'extrémité du conducteur axial 5 pour ne plus permettre aucune liaison électrique entre les conducteurs 5 et 5', après un vissage approprié dans l'exemple de réalisation présenté. Le retrait axial de la douille 8 qui est ainsi réalisé, dégage mécaniquement les deux conducteurs axiaux 5, 5' l'un de l'autre. Dans la forme de réalisation préférée qui est présentée, l'un des conducteurs, soit ici 5, est monté de manière que son extrémité de raccordement externe ne saille pas ou pratiquement pas de la face externe 11 de la traversée 1 où il passe. L'autre conducteur axial, soit ici 5', avec lequel il est prévu qu'il se raccorde, est alors agencé de manière à saillir extérieurement, de la face externe 11' de la traversée 1' où il passe, d'une longueur qui est déterminée en fonction de la distance de séparation choisie entre traversées 1 et 1', soit donc pratiquement entre caissons adjacents. La saillie du conducteur axial 5', les longueurs de la douille 8 et de sa tige filetée 9, ainsi que les profondeurs des cavités 7 et 7' sont choisies de manière complémentaire pour obtenir les positions d'interconnexion et de déconnexion désirées pour la douille en fonction des contraintes en matière de distance entre caissons adjacents. L'utilisation d'une douille déplaçable axialement, de manière simple et notamment par vissage, facilite les opérations de mise en place et de remplacement, ainsi que le déplacement isolé d'un caisson, en cas de besoin.

Comme indiqué plus haut, une structure d'isolement électrique doit nécessairement être associée au dispositif d'interconnexion dans un module tel que décrit ci-dessus, en raison de la haute tension électrique pour laquelle sont prévus les équipements et leurs raccordements que les modules de raccordement selon l'invention sont susceptibles d'interconnecter.

Dans les différentes réalisations proposées ici, il est prévu une structure d'isolement électrique de module qui est d'allure tubulaire et qui est constituée d'un manchon isolant 12, en matériau flexible. Ce manchon est réalisé de manière à pouvoir se comprimer ou s'étendre en longueur, en fonction des besoins, et il est dit de longueur élastiquement adaptable. Dans une forme préférée de réalisation, ce manchon 12 comporte une section centrale tubulaire comportant au moins un repli annulaire saillant de rappel élastique, comme le montre les figures 1 et 2 où la section centrale comporte un repli annulaire saillant en son milieu. Les extrémités du manchon 12 sont préférablement annulairement aplaties de manière à pouvoir venir se plaquer chacune contre une face externe d'une des deux traversées 1, 1' dont les conducteurs axiaux 5 et 5' sont prévus reliés par le dispositif d'interconnexion que loge le manchon. Dans les réalisations présentées, les faces externes des traversées sont préférablement prévues planes, elles peuvent alternativement être d'allure tronconique. Le manchon peut être réalisé en silicone ou en EPDM élastiquement déformable et sa surface extérieure est recouvert d'un revêtement semi-conducteur à l'exception des zones correspondant aux faces d'appui du manchon contre les faces externes des traversées.

Des brides amovibles 13, 13' permettent de plaquer les extrémités aplaties du manchon 12 contre les faces externes des traversées 1 et 1'.Dans l'exemple présenté sur les figures 1 et 2, ces brides se fixent par boulonnage au moyen de vis 14, 14' ou de boulons sur les caissons et par exemple dans des inserts taraudés que comportent périphériquement les traversées 1, 1'. Ce revêtement semi-conducteur qui est mis au potentiel de la terre par exemple par l'intermédiaire des brides de serrage 13, est une couche de silicone chargé en carbones par exemple qui crée une surface équipotentielle faiblement conductrice. Par ailleurs, la surface intérieure du manchon est également revêtue d'une couche de silicone chargée en carbones par exemple formant un revêtement semi-conducteur qui est au contact des conducteurs axiaux 5 ou 5' et donc au potentiel haute tension.

Dans la réalisation envisagée, le manchon présente une section d'allure en M, comme on le voit sur les coupes des figures 1 et 2, et il couvre la longue partie en saillie du conducteur axial 5' et le court intervalle séparant les deux conducteurs 5, 5', lorsque la douille est en position d'interconnexion et que le module est en place avec les extrémités aplaties du manchon 12 appliquées contre les faces externes des traversées 1, 1'. Un déboulonnage des vis 14 permet de dissocier la bride 13 et l'extrémité aplatie correspondante du manchon, de la traversée 1. Il est alors possible de ramener l'extrémité aplatie en arrière pour déplacer le dispositif d'interconnexion que constitue la douille 8 et donc ici pour la visser et la déconnecter du conducteur axial 5. Ces opérations permettent de dissocier simplement les conducteurs axiaux 5 des modules prévus entre deux caissons par exemple pour déplacer l'un des caissons. Dans une variante de réalisation, présentée sur les figures 1 et 2, il est prévu un bourrelet périphérique 15, à proximité de l'extrémité de la douille 8 qui pénètre dans la cavité 7, pour entraîner le retrait de l'extrémité aplatie du manchon 12 avec cette extrémité de douille, lorsque la douille est vissée.

Il est prévu à cet effet que ce bourrelet coopère avec un des inserts annulaires 16, 16' réalisés, en matériau élastique semi-conducteur, intérieurement aux extrémités du manchon, à des fins de contrôle de champ électrique, au niveau où ce manchon vient en appui contre une traversée en extrémité de celle-ci et sur le pourtour de l'extrémité de raccordement externe du conducteur axial qui passe par cette traversée. Dans l'exemple de réalisation proposé, l'insert 16 porté par l'extrémité du manchon qui vient en appui contre la traversée 1 est doté d'un épaulement contre lequel le bourrelet vient en appui. A noter que les inserts annulaires 16,16' semi-conducteurs sont de préférence disposés aux deux extrémités du revêtement semi-conducteur à l'intérieur du manchon.

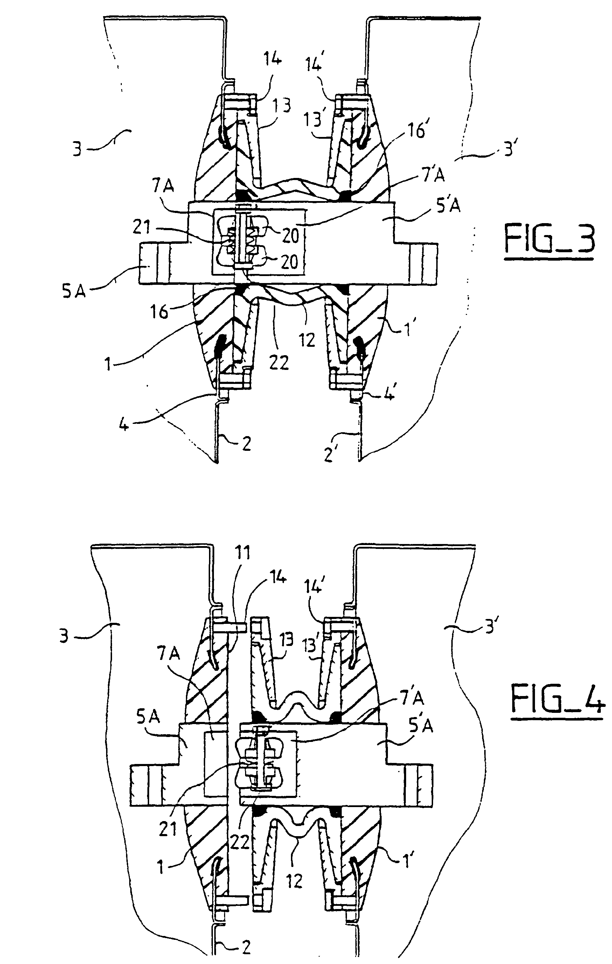

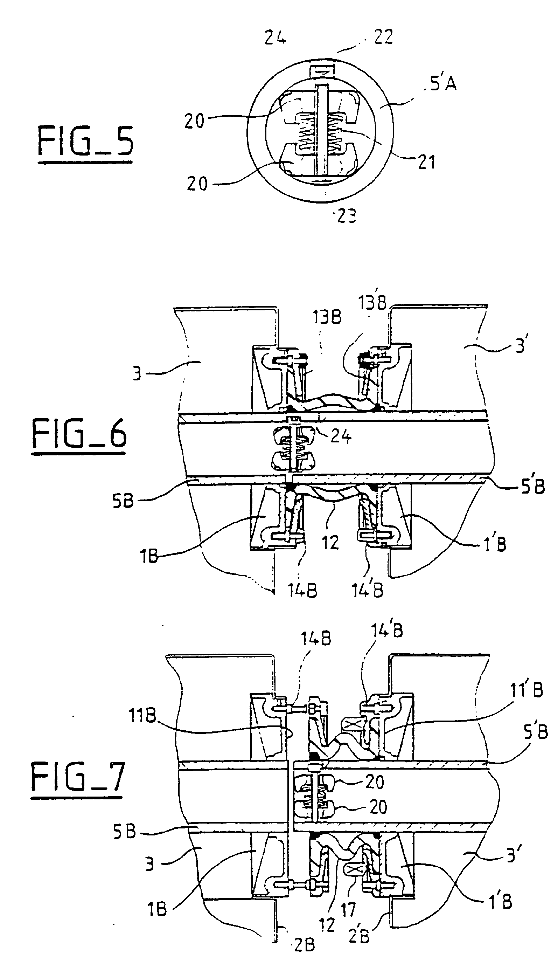

Une variante de réalisation de système d'interconnexion, selon l'invention, est présentée sur les figures 3 et 4. Le système s'y différencie essentiellement de celui présenté ci-dessus par son dispositif d'interconnexion, Les éléments présentés sur les figures 3, 4, qui sont susceptibles d'être identiques à ceux présentés sur les figures 1 et 2 y sont désignés par les mêmes références, ceux qui sont légèrement différents y sont indicés A.

De même que précédemment les conducteurs axiaux alignés à raccorder 5A, 5'A ont leur extrémité de raccordement externe qui comportent une cavité d'extrémité 7A ou 7'A, borgne et d'allure cylindrique. L'un des conducteurs SA est monté de manière que son extrémité de raccordement externe ne saille pas ou pratiquement pas de la face externe 11 de la traversée 1 où il passe. L'autre conducteur axial, soit ici 5'A, avec lequel il est prévu qu'il se raccorde, est alors agencé de manière à saillir extérieurement, de la face externe 11' de la traversée 1' où il passe, d'une longueur qui est déterminée en fonction de la distance de séparation choisie entre traversées 1 et 1', soit donc pratiquement entre caissons adjacents, comme déjà indiqué précédemment. Le dispositif d'interconnexion est ici réalisé de manière différente, il comporte ici deux demi-coquilles de contact 20 qui sont assemblées avec leurs concavités respectives orientées l'une vers l'autre et qui sont élastiquement écartées l'une de l'autre par un agencement à ressort 21 de manière à pouvoir venir se plaquer à l'intérieur de l'une et/ou de l'autre des cavités 7 et 7A, suivant la position du dispositif qui les comporte par rapport aux extrémités de raccordement externe des conducteurs axiaux 5A, 5'A. Ce dispositif est également mis en oeuvre dans les formes de réalisation illustrées sur les figures 5 à 9. Dans la réalisation proposée, les deux demi-coquilles de contact 20 sont montées sur une vis 22 qui les assujettit au conducteur axial 5'A dont la saillie et la cavité sont plus longues. Cette vis 22 est coopère avec un écrou 23 pour limiter l'écartement des demi-coques de manière à permettre à celles-ci d'entrer librement dans les cylindres des cavités 7A, 7'A, malgré la force d'écartement de l'agencement à ressort, tant qu'un dévissage ne les libère pas. L'agencement à ressort 21 est par exemple constitué par un empilage de rondelles élastiques monté entre les demi-coques sur la tige de la vis 22.

La cavité 7'A comporte ici une rainure longitudinale d'extrémité 24 qui reçoit la tête que comporte la vis 22 et qui permet un déplacement de cette tête dans l'axe de la rainure entre deux positions prédéterminées. Pour une première de ces positions l'assemblage formé par les demi-coques et par l'agencement à ressort montés sur la tige de la vis 22, se trouve quasi-totalement logé dans la cavité 7A, en raison du positionnement de la tête de la vis 22 au fond de la rainure longitudinale 24. Les demi-coques doivent alors avoir été rapprochées l'une de l'autre par vissage de la vis 22 dans l'écrou 23, pour permettre la pénétration. Pour la seconde position, l'assemblage évoqué ci-dessus est partiellement positionné dans chacune des cavités 7A, 7'A des deux conducteurs axiaux alignés, chaque demi-coque étant partiellement engagée dans chacune des cavités, après que la tête de la vis 22 ait été amenée à l'embouchure de la rainure 24, au niveau de l'extrémité en saillie externe du conducteur axial 5'A.

Le dévissage partiel de la vis 22 permet alors aux demi-coques de s'écarter l'une de l'autre et de prendre contact chacune avec les deux conducteurs axiaux 5A, 5'A à l'intérieur des cavités cylindriques d'extrémité 7A, 7'A de la manière montrée sur la figure 5 pour le conducteur 5'A. L'utilisation d'un dispositif d'interconnexion à demi-coques décrit ci-dessus, permet de réaliser de manière aisée et rapide les opérations de mise en place et de remplacement, ainsi que le déplacement isolé d'un caisson, de même que le montage à douille. Il présente l'avantage d'autoriser un désalignement angulaire et/ou radial entre caissons interconnectés. Les opérations de connexion et de déconnexion peuvent être réalisées à l'aide d'un outil simple, par exemple un tournevis, et de manière simple grâce à l'accès offert par la rétraction du manchon et par la rainure 24 en extrémité du conducteur axial 5'A. Le déplacement de l'assemblage, formé par les demi-coques sur la tige de vis 22 dont la tête est engagée dans la rainure 24, peut être obtenu par une poussée latérale sur cette par exemple au moyen d'une extrémité de tournevis.

La structure d'isolement électrique destinée à être associée au dispositif d'interconnexion que constitue cet assemblage composé au moyen des demi-coques peut être pratiquement identique à celle prévue pour le montage à douille et sa description n'est donc pas répétée ici.

Une seconde variante de système d'interconnexion, selon l'invention, est présentée sur les figures 6 et 7. Elle est plus particulièrement prévue pour le cas où les conducteurs axiaux sont constitués par des tubes creux et notamment de tubes creux traversant les caissons de part en part. Ces tubes permettent de mettre en oeuvre des traversées de courant plus simples, tant à réaliser qu'à installer, et donc moins coûteuses que les traversées précédemment prévues. Comme précédemment, les éléments présentés sur les figures 6 à 11 qui sont susceptibles d'être identiques à ceux présentés sur les figures précédentes y sont désignés par les mêmes références, ceux qui sont légèrement différents y sont indicés B.

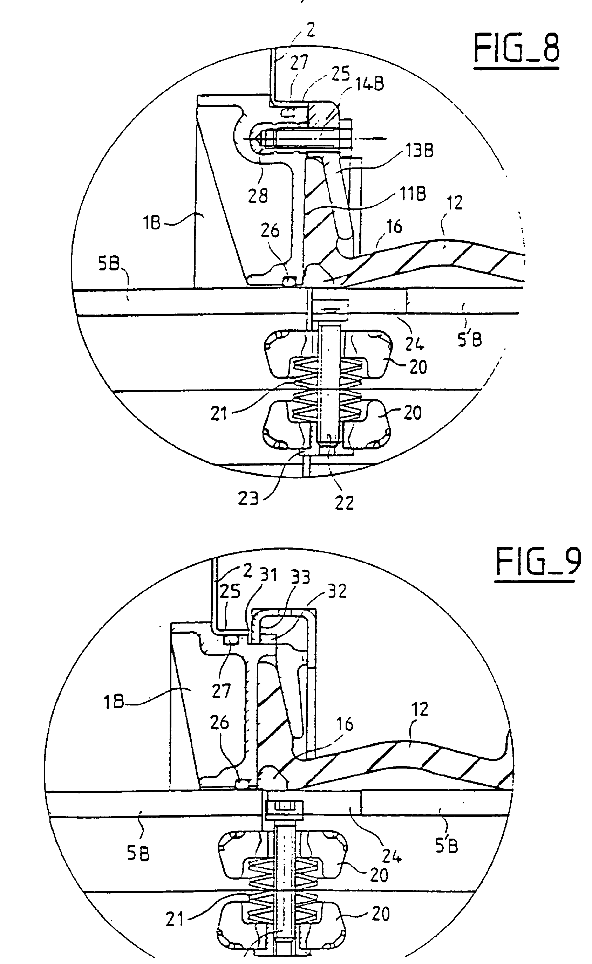

De même que précédemment les conducteurs axiaux alignés à raccorder 5B, 5'B ont leur extrémité de raccordement externe qui comportent une cavité 7B ou 7'B, cette cavité se prolongeant ici sur la longueur du conducteur qui est constitué par un tube cylindrique. Un conducteur axial, tel 5B, formé par un tube peut éventuellement être monté de manière à traverser le caisson où il pénètre, il est alors porté par deux traversées de courant alignées montées dans des parois opposées du caisson, ceci n'étant pas illustré ici. Comme dans les variantes présentées ci-dessus, l'un des conducteurs 5B est monté de manière que son extrémité de raccordement externe ne saille pas ou pratiquement pas de la face externe 11B de la traversée 1B où il passe, ainsi qu'on le voit notamment sur la figure 8. L'autre conducteur axial, soit ici 5'B, avec lequel il est prévu qu'il se raccorde, est alors agencé de manière à saillir extérieurement, de la face externe 11'B de la traversée 1'B où il passe, d'une longueur qui est pratiquement déterminée dans les mêmes conditions que pour le conducteur 5'A. Le dispositif d'interconnexion est identique à celui prévu pour l'interconnexion des conducteurs 5A, 5'A et il est susceptible d'être monté sur le conducteur 5'B le plus long de la même manière que sur le conducteur 5'A. La mise en oeuvre de ce dispositif d'interconnexion est identique à celle décrite en relation avec les figures 3 à 5 et elle n'est donc pas répétée ici. Par contre le montage des conducteurs 5B, 5'B dans les traversées qui les portent s'effectue de manière particulièrement simple, les traversées 1B, 1'B prévues pouvant être réalisées de manière nettement plus simple et moins coûteuse.

Les traversées 1B, 1'B se montent dans des ouvertures des caissons qui sont analogues à celles prévues pour les éléments porteurs 4, 4' dans les variantes précédentes. Ces ouvertures sont classiquement circulaires et bordées par une collerette périphérique qui saille extérieurement au caisson par exemple perpendiculairement à la paroi, comme on le voit sur les figures de détail 8 et 9 pour la paroi 2 d'un caisson qui est dotée d'une collerette 25. Les traversées 1B, 1'B sont par exemple réalisées sous la forme de pièces cylindriques, réalisées par injection thermoplastique, qui comportent un canal tubulaire central dont le diamètre correspond au diamètre extérieur d'un conducteur axial 5B ou 5'B, tubulaire. Un joint circulaire 26 est logé dans une rainure intérieure circulaire de ce canal central pour assurer l'étanchéité en se plaquant contre le conducteur axial qui le traverse.

Un autre joint circulaire 27 vient se loger dans une rainure extérieure circulaire située dans la zone par l'intermédiaire de laquelle la traversée vient se positionner par un enmanchement contre la paroi interne du cylindre que définit la collerette 25 d'une ouverture de caisson prévue pour le montage d'une traversée. L'étagement des traversées 1B, 1'B est ici prévu pour permettre à une traversée de venir intérieurement en butée contre la paroi 2 où elle se monte, alors que la partie cylindrique portant le joint circulaire 27 vient se positionner dans le cylindre défini par une collerette 25 de cette paroi 2, le joint 27 étant chargé d'assurer l'étanchéité à ce niveau.

Dans l'exemple de réalisation proposé sur les figures 6 à 8 et comme précédemment, les traversées 1B, 1'B comportent périphériquement des inserts taraudés 28, 28', au-delà de leurs faces externes respectives d'appui pour extrémité aplatie de manchon 12. Ces inserts 28, 28' sont prévus pour recevoir les tiges filetées de vis de fixation 14B, 14'B de bride, ils sont ici ménagés à la périphérie de la face externe d'appui, plane ou éventuellement conique réalisée dans la zone destinée à recevoir une extrémité complémentaire de manchon 12.

En dernier lieu et comme schématisé sur la figure 7, il est prévu de positionner un transformateur de courant torique 17 autour du manchon isolant 12 que comporte un module et ceci dans chacune des variantes de réalisation proposées pour les modules de système d'interconnexion selon l'invention.

## Revendications

1. Système d'interconnexion entre cellules électriques moyenne ou haute tension logées dans des caissons hermétiques (3, 3') blindés à isolement gazeux qui comportent des traversées de courant (1, 1') isolantes et étanches, les conducteurs axiaux (5, 5') respectifs desdites traversées (1, 1') étant alignés deux à deux et possédant chacun une extrémité de raccordement extérieurement accessible, deux extrémités adjacentes de conducteurs axiaux de traversées voisines étant électriquement reliées entre elles par un dispositif d'interconnexion (8) constitutif du système et entouré d'une structure d'isolement électrique d'allure tubulaire approximativement coaxiale aux conducteurs axiaux et constituée par un manchon isolant (12) flexible et de longueur élastiquement adaptable, chaque extrémité annulaire d'un manchon étant fixée à une traversée de courant par des moyens de fixation amovibles (13, 13'), **caractérisé en ce que** le manchon (12) possède une partie centrale longitudinale qui comporte un repli annulaire saillant radialement pour procurer un effet de rappel élastique, et **en ce que** ledit manchon possède entre ladite partie centrale et au moins une de ses deux extrémités aplatie annulairement une zone longitudinale qui comporte un repli annulaire rentrant radialement pour que la surface intérieure dudit manchon soit localement en contact avec un conducteur axial (5,5') au niveau de ladite zone, ladite surface intérieure étant recouverte d'une couche semi-conductrice mise au potentiel des conducteurs axiaux.

2. Système, selon la revendication 1, dans lequel le dispositif d'interconnexion (8) est monté déplaçable en translation, sur l'extrémité de raccordement externe d'un premier des conducteurs axiaux qui saille extérieurement d'une longueur légèrement inférieure à la distance séparant les traversées voisines propres à ces conducteurs, pour pouvoir partiellement se loger à l'intérieur d'une cavité (7, 7') ménagée à l'extrémité de raccordement externe de chacun des deux conducteurs axiaux alignés que ce dispositif permet alors de relier électriquement, l'extrémité de raccordement externe du premier conducteur axial (5') comportant une cavité (7') d'une profondeur choisie pour y permettre un retrait en translation du dispositif d'interconnexion conduisant à une interruption de la continuité électrique entre les deux conducteurs axiaux alignés.

3. Système, selon l'une des revendications 1 à 2, dans lequel le manchon est extérieurement et intérieurement recouvert d'un revêtement semi-conducteur, à l'exception des zones correspondant aux faces d'appui du manchon contre les traversées.

4. Système, selon l'une des revendications 1 à 3, dans lequel le manchon est intérieurement bordé par un insert annulaire de contrôle de champ électrique (16, 16'), en matériau semi-conducteur, à chacune de ses deux extrémités, au niveau où ce manchon vient en appui contre une traversée (1, 1') en extrémité de celle-ci et sur le pourtour de l'extrémité de raccordement externe du conducteur axial qui passe par cette traversée.

5. Système, selon l'une des revendications 2 à 4, dans lequel le dispositif d'interconnexion (8) est constitué par une douille dotée d'un corps cylindrique se prolongeant par une tige filetée (9) venant se visser dans un alésage taraudé situé au fond d'une cavité d'extrémité (7'), borgne et étagée, prévue pour la douille à l'extrémité de raccordement externe du premier des conducteurs axiaux (5') à raccorder, le corps cylindrique de la douille restant en liaison électrique par l'intermédiaire de contacts glissants (10) avec l'intérieur de l'étage de diamètre correspondant de la cavité (7') d'où il sort plus ou moins en fonction du vissage réalisé pour la douille, et l'extrémité de ce corps cylindrique de douille en saillie entrant en contact glissant avec une cavité borgne(7), de diamètre correspondant, ménagée à l'extrémité de raccordement externe du second des conducteurs axiaux (5) dans laquelle ladite extrémité de corps cylindrique pénètre, lorsque le dévissage réalisé est suffisant et permet d'assurer une continuité électrique entre les deux conducteurs axiaux avec lesquels le corps cylindrique de douille est alors simultanément en contact.

6. Système, selon la revendication 5, dans lequel l'insert (16), prévu pour venir se positionner au niveau de la traversée (1) où passe un second conducteur axial (5), est doté d'un épaulement radial coopérant avec un bourrelet périphérique (15) de la douille pour que l'extrémité du manchon, qui vient en appui sur la traversée (1) où passe le second conducteur axial (5), soit maintenue éloignée de cette traversée, lorsque la douille (8)est vissée.

7. Système, selon l'une des revendications 2 à 4, dans lequel:
- le dispositif d'interconnexion est constitué par un assemblage de deux demi-coquilles de contact (20) accolées qui sont élastiquement écartées l'une de l'autre pour pouvoir venir séparément en contact avec les extrémités de raccordement externe de deux conducteurs axiaux (5A, 5'A) à raccorder, dans la cavité d'extrémité (7A, 7'A), borgne, que comporte chacun de ces conducteurs, depuis une position de rapprochement entre demi-coquilles qui permet leur pénétration dans les dites cavités d'extrémité et qui est obtenue par l'action d'une vis (22) sur laquelle sont montées les deux demi-coquilles,
- l'assemblage est longitudinalement déplaçable à l'extrémité de raccordement externe, largement saillante, du premier conducteur axial (5'A), entre une position permettant aux deux demi-coquilles d'être maintenues en contact avec les conducteurs axiaux dans les cavités desquels elles sont partiellement insérées et une position pour laquelle les deux demi-coquilles ne sont plus insérées que dans celle des cavités qui est ménagée à l'extrémité de raccordement externe du premier conducteur axial.

8. Système, selon l'une des revendications 2 à 4, dans lequel
- le dispositif d'interconnexion est constitué par un assemblage de deux demi-coquilles de contact (20) accolées qui sont élastiquement écartées l'une de l'autre pour pouvoir venir séparément en contact avec deux conducteurs axiaux (5B, 5'B) à raccorder, de type tube creux, à une extrémité de raccordement externe du tube que forme chacun de ces conducteurs, depuis une position de rapprochement entre demi-coquilles qui permet leur pénétration dans les extrémités voisines des deux tubes et qui est obtenue par vissage d'une vis (22) ;
- les demi-coquilles sont montées sur la tige de la vis (22) par l'intermédiaire de laquelle elles sont rendues solidaires d'une extrémité de raccordement externe du tube du premier conducteur axial (5'B) qui saille extérieurement d'une longueur correspondant à la distance séparant les deux traversées (1B, 1'B) voisines prévues chacune pour le passage de l'un des tubes ;
- l'assemblage est longitudinalement déplaçable à l'extrémité de raccordement externe du tube du premier conducteur axial (5'B), entre une position permettant aux deux demi-coquilles d'être maintenues en contact avec les deux tubes dans lesquels elles sont partiellement insérées et une position pour laquelle les deux demi-coquilles ne sont plus insérées que dans l'extrémité de raccordement externe, largement saillante, du tube formant le premier conducteur axial.

9. Système selon la revendication 8, dans lequel les tubes creux qui constituent les conducteurs axiaux (5B, 5'B) sont enfilés respectivement dans des traversées (1B, 1'B) qui sont chacune enmanchées dans une colerette (25) formée autour d'une ouverture dans une paroi (2, 2') d'un caisson, chaque traversée (1B,1B') comportant d'une part une rainure extérieure circulaire dans laquelle est monté un premier joint circulaire (27) assurant une étanchéité entre la traversée et la colerette dans laquelle est enmanchée la traversée et d'autre part une rainure intérieure circulaire dans laquelle est monté un second joint circulaire (26) assurant une étanchéité entre la traversée et le tube qui est enfilé dans cette traversée.

10. Système, selon l'une des revendications 1 à 9, dans lequel les traversées (1, 1') des conducteurs axiaux (5, 5') comportent chacune une face d'appui, pour extrémité aplatie de manchon isolant (12), qui est circulaire et plane ou conique.

11. Système, selon l'une des revendications 1 à 10 précédentes, dans lequel un transformateur de courant torique (17) est monté autour du manchon isolant (12).

## Claims

1. A system for interconnecting medium-voltage or high-voltage electrical cells housed in shielded, gas-insulated and hermetically sealed enclosures (3, 3') which include sealed and insulative bushings (1, 1'), the respective axial conductors (5, 5') of said bushings (1, 1') being aligned in pairs and each having an accessible outside connecting end, two adjacent ends of axial conductors of adjoining bushings being electrically connected together by an interconnecting device (8) constituting the system and surrounded by a tubular electrically insulating structure that is approximately coaxial with the axial conductors and constituted by a flexible insulative sleeve (12) of elastically adaptable length, each annular end of a sleeve being fixed to a bushing by removable fixing means (13, 13'), **characterized in that** the sleeve (12) has a longitudinal central portion which includes a projecting annular fold forming a return spring, and **in that** said sleeve has, between said central portion and at least one of its two annular flat ends, a longitudinal zone which includes a re-entrant annular fold so that the inside surface of said sleeve is locally in contact with an axial conductor (5, 5') at said zone, said inside surface being covered by a semi-conductive layer that is put to the same potential as the axial conductors.

2. A system according to claim 1, wherein the interconnection device (8) is mounted so that it can be moved in translation on the outside connecting end of a first axial conductor which projects outwards by an amount slightly less than the distance between the adjoining bushings of said conductors, so that it can be partially housed inside a cavity (7, 7') provided at the outside connecting end of each of the two aligned axial conductors electrically connected by the device, the outside connecting end of the first axial conductor (5') including a cavity (7') whose depth is chosen to enable the interconnection device to be withdrawn into it by movement in translation to disconnect the two aligned axial conductors.

3. A system according to either claim 1 or claim 2, wherein the sleeve is covered on the inside and the outside with a semiconductor coating except for areas corresponding to the faces of the sleeve which bear against the bushings.

4. A system according to any one of claims 1 to 3, wherein the sleeve has an annular semiconductor material electric field control insert (16, 16') at each end where it bears against the end of a bushing (1, 1') and over the perimeter of the outside connecting end of the axial conductor that passes through said bushing.

5. A system according to any one of claims 2 to 4, wherein the interconnection device (8) includes a bush which has a cylindrical body extended by a threaded bore (9) which screws into a threaded bore at the closed end of a stepped blind end cavity (7') provided for the bush in the outside connecting end of the first axial conductor (5') to be connected, the cylindrical body of the bush continuing to be electrically connected by means of sliding contacts (10) to the inside of the corresponding diameter stage of the cavity (7'), from which it protrudes more or less according to how far the bush is screwed in, and the projecting end of the cylindrical body of the bush coming into sliding contact with a blind cavity (7) of corresponding diameter formed at the outside connecting end of the second axial conductor (5), into which said cylindrical body end penetrates when unscrewed sufficiently and connects the two axial conductors with which the cylindrical body of the bush is then simultaneously in contact.

6. A system according to claim 5, wherein the insert (16) adapted to be positioned where a second axial conductor (5) passes through the bushing (1) has a radial shoulder co-operating with a peripheral bead (15) of the bush so that the end of the sleeve which is pressed onto the bushing (1) through which the second axial conductor (5) passes is held away from the bushing when the bush (8) is screwed in.

7. A system according to any one of claims 2 to 4, wherein:
- the interconnection device includes an assembly of two contact half-shells (20) in contact which are elastically spread apart in order to come separately into contact with the outside connecting ends of two axial conductors (5A, 5'A) to be connected, in the blind end cavity (7A, 7'A) of each of said conductors, from a closely spaced position of the half-shells which enables them to penetrate into said end cavities and which is obtained by the action of a screw (22) on which the two half-shells are mounted, and
- the assembly can be moved longitudinally at the greatly projecting outside connecting end of the first axial conductor (5'A) between a position enabling the two half-shells to be kept in contact with the axial conductors in the cavities of which they are partially inserted and a position in which the two half-shells are inserted only in the cavity at the outside connecting end of the first axial conductor.

8. A system according to any one of claims 2 to 4, wherein:
- the interconnection device includes an assembly of two contact half-shells (20) in contact which are elastically spread apart in order to come separately into contact with the outside connecting ends of two axial conductors (5B, 5'B) to be connected, of the hollow tube type, at an outside connecting end of the tube formed by each conductor, from a closely spaced position of the half-shells which enables them to penetrate into the adjoining ends of the two tubes and which is obtained by the action of a screw (22) on which the two half-shells are mounted,
- the half-shells are mounted on the shank of the screw (22) by means of which they are fastened to an outside connecting end of the tube of the first axial conductor (5'B) which projects outwardly by an amount corresponding to the distance between the adjoining two bushings (1B, 1'B) through each of which one of the tubes passes; and
- the assembly can be moved longitudinally at the outside connecting end of the first axial conductor (5'B) between a position enabling the two half-shells to be kept in contact with the two tubes into which they are partially inserted and a position in which the two half-shells are inserted only in the cavity at the greatly projecting outside connecting end of the tube forming the first axial conductor.

9. A system according to claim 8, wherein the hollow tubes that constitute the axial conductors (5B, 5'B) are respectively threaded into bushings (1B, 1'B) each of which is force-fitted into a flange (25) around an opening in a wall (2, 2') of a enclosure and each bushing (1B, 1'B) includes a circular outside groove in which is mounted a first circular seal (27) providing a seal between the bushing and the flange into which the bushing is force-fitted and a circular inside groove in which is mounted a second circular seal (26) providing a seal between the bushing and the tube which is threaded into that bushing.

10. A system according to any one of claims 1 to 9, wherein the bushings (1, 1') of the axial conductors (5, 5') each have a circular and plane or conical bearing face for the flat end of the insulative sleeve (12).

11. A system according to any one of claims 1 to 10, wherein a toroidal current transformer (17) is mounted around the insulative sleeve (12).

## Patentansprüche

1. System zum Verbinden zwischen Mittel- bzw. Hochspannungszellen, die in hermetisch gekapselten, gasisolierten Kästen (3, 3') aufgenommen sind, welche isolierende und dichte Stromdurchführungen (1, 1') aufweisen, wobei die jeweiligen axialen Leiter (5, 5') der Durchführungen (1, 1') paarweise fluchten und jeweils ein von außen zugängliches Anschlussende besitzen, wobei zwei aneinandergrenzende Enden der axialen Leiter von benachbarten Durchführungen über eine Verbindungsvorrichtung (8) elektrisch miteinander verbunden sind, welche Bestandteil des Systems ist und von einem elektrisch isolierenden Aufbau mit rohrförmigem Verlauf umgeben wird, der in etwa koaxial zu den axialen Leitern verläuft und aus einer biegsamen Isolierhülse (12) mit elastisch anpassbarer Länge besteht, wobei jedes ringförmige Ende einer Hülse über lösbare Befestigungsmittel (13, 13') an einer Stromdurchführung befestigt ist, **dadurch gekennzeichnet, dass** die Hülse (12) einen Mittellängsabschnitt besitzt, der eine radial vorspringende ringförmige Biegung aufweist, um eine federnde Rückstellwirkung zu erlangen, und dass die Hülse zwischen dem Mittelabschnitt und zumindest eines ihrer beiden ringförmig abgeflachten Enden einen längs verlaufenden Bereich besitzt, der eine radial rückspringende ringförmige Biegung aufweist, damit die Innenfläche der Hülse bei dem genannten Bereich mit einem axialen Leiter (5, 5') bereichsweise in Kontakt steht, wobei die Innenfläche mit einer halbleitenden Schicht überdeckt ist, die an das Potential der axialen Leiter angelegt ist.

2. System nach Anspruch 1, wobei die Verbindungsvorrichtung (8) an dem äußeren Anschlussende eines ersten der axialen Leiter verschiebbar gelagert ist, das mit einer Länge nach außen vorspringt, die geringfügig kleiner als der Abstand ist, welcher die diesen Leitern eigenen benachbarten Durchführungen voneinander trennt, um teilweise innerhalb eines Hohlraums (7, 7') aufgenommen werden zu können, der am äußeren Anschlussende eines jeden der beiden fluchtenden axialen Leiter ausgebildet ist, welche dann durch diese Vorrichtung elektrisch verbunden werden können, wobei das äußere Anschlussende des ersten axialen Leiters (5') einen Hohlraum (7') mit einer Tiefe aufweist, die so gewählt ist, dass darin ein translatorisches Einfahren der Verbindungsvorrichtung möglich ist, das zu einer Unterbrechung des Stromdurchgangs zwischen den beiden fluchtenden axialen Leitern führt.

3. System nach einem der Ansprüche 1 und 2, wobei abgesehen von den Bereichen, die den Flächen zum Abstützen der Hülse an den Durchführungen entsprechen, die Hülse außen und innen mit einer halbleitenden Beschichtung überdeckt ist.

4. System nach einem der Ansprüche 1 bis 3, wobei die Hülse innen von einem ringförmigen Einsatz zum Prüfen eines elektrischen Feldes (16, 16') aus halbleitendem Material an jedem ihrer beiden Enden in dem Bereich eingefasst wird, wo diese Hülse in Abstützung an eine Durchführung (1, 1') im Endbereich derselben und am Umfang des äußeren Anschlussendes des axialen Leiters gelangt, der durch diese Durchführung führt.

5. System nach einem der Ansprüche 2 bis 4, wobei die Verbindungsvorrichtung (8) aus einer Buchse mit einem zylindrischen Körper besteht, der sich in einen Gewindeschaft (9) fortsetzt, der in eine Gewindebohrung am Boden eines endseitigen gestuften Sacklochhohlraums (7') eingeschraubt wird, der für die Buchse am äußeren Anschlussende des ersten der anzuschließenden axialen Leiter (5') vorgesehen ist, wobei der zylindrische Körper der Buchse über Gleitkontakte (10) mit dem Inneren der entsprechenden Durchmesserabstufung des Hohlraums (7') in elektrischer Verbindung bleibt, aus dem er je nach mit der Buchse erfolgtem Verschrauben mehr oder weniger weit heraustritt, und wobei das vorspringende Ende dieses zylindrischen Buchsenkörpers mit einem Sacklochhohlraum (7) mit entsprechendem Durchmesser in Gleitkontakt tritt, der am äußeren Anschlussende des zweiten der axialen Leiter (5) ausgebildet ist, in welches das Ende des zylindrischen Körpers eindringt, wenn das Abschrauben weit genug erfolgt ist, und gestattet, einen Stromdurchgang zwischen den beiden axialen Leitern zu gewährleisten, mit denen der zylindrische Buchsenkörper dann zugleich in Kontakt steht.

6. System nach Anspruch 5, wobei der Einsatz (16), der zum Positionieren im Bereich der Durchführung (1) vorgesehen ist, wo ein zweiter axialer Leiter (5) durchtritt, mit einer radialen Schulter ausgestattet ist, die mit einer Umfangswulst (15) der Buchse zusammenwirkt, damit das Ende der Hülse, das in Abstützung an die Durchführung (1) gelangt, durch welche der zweite axiale Leiter (5) führt, von dieser Durchführung entfernt gehalten wird, wenn die Buchse (8) verschraubt ist.

7. System nach einem der Ansprüche 2 bis 4, wobei:
- die Verbindungsvorrichtung aus einer Zusammenfügung von zwei aneinander gesetzten Kontakthalbschalen (20) besteht, die federnd voneinander abgespreizt werden, um separat mit den äußeren Anschlussenden von zwei anzuschließenden axialen Leitern (5A, 5'A) in dem endseitigen Sacklochhohlraum (7A, 7'A) in Kontakt treten zu können, den jeder dieser Leiter aufweist, und zwar ausgehend von einer Annäherungsstellung zwischen den Halbschalen, welche deren Eindringen in die endseitigen Hohlräume gestattet und die durch das Einwirken einer Schraube (22) erhalten wird, an der die beiden Halbschalen montiert sind,
- die Zusammenfügung am weitgehend vorspringenden äußeren Anschlussende des ersten axialen Leiters (5'A) zwischen einer Stellung, in welcher die beiden Halbschalen in Kontakt mit den axialen Leitern gehalten werden können, in deren Hohlräume sie teilweise eingefügt sind, und einer Stellung längs verstellbar ist, bei welcher die beiden Halbschalen nur noch in denjenigen der Höhlräume eingefügt sind, der am äußeren Anschlussende des ersten axialen Leiters ausgebildet ist.

8. System nach einem der Ansprüche 2 bis 4, wobei
- die Verbindungsvorrichtung aus einer Zusammenfügung von zwei aneinander gesetzten Kontakthalbschalen (20) besteht, die federnd voneinander abgespreizt werden, um separat mit zwei anzuschließenden axialen Leitern (5B, 5'B) vom Typ Hohlröhre an einem äußeren Anschlussende der Röhre in Kontakt treten zu können, das jeder dieser Leiter bildet, und zwar ausgehend von einer Annäherungsstellung zwischen den Halbschalen, welche deren Eindringen in die benachbarten Enden der beiden Röhren gestattet und die durch Einschrauben einer Schraube (22) erhalten wird;
- die Halbschalen an den Schaft der Schraube (22) montiert sind, über welche sie fest mit einem äußeren Anschlussende der Röhre des ersten axialen Leiters (5'B) verbunden sind, der mit einer Länge nach außen vorspringt, die dem Abstand entspricht, welcher die beiden benachbarten Durchführungen (1B, 1'B) voneinander trennt, die jeweils für das Durchführen einer der Röhren vorgesehen sind;
- die Zusammenfügung am äußeren Anschlussende der Röhre des ersten axialen Leiters (5'B) zwischen einer Stellung, in welcher die beiden Halbschalen in Kontakt mit den beiden Röhren gehalten werden können, in die sie teilweise eingefügt sind, und einer Stellung längs verstellbar ist, bei welcher die beiden Halbschalen nur noch in das weitgehend vorspringende Anschlussende der den ersten axialen Leiter bildenden Röhre eingefügt sind.

9. System nach Anspruch 8, wobei die die axialen Leiter (5B, 5'B) bildenden Hohlröhren in jeweilige Durchführungen (1B, 1'B) eingesteckt sind, die jeweils in einen Kragen (25) eingepresst sind, der um eine Öffnung in einer Wand (2, 2') eines Kastens ausgebildet ist, wobei jede Durchführung (1B, 1'B) einerseits eine kreisförmige Außennut aufweist, in welche eine erste kreisförmige Dichtung (27) eingesetzt ist, welche für eine Dichtheit zwischen der Durchführung und dem Kragen sorgt, in welchen die Durchführung eingepresst ist, und andererseits eine kreisförmige Innennut, in welche eine zweite kreisförmige Dichtung (26) eingesetzt ist, welche für eine Dichtheit zwischen der Durchführung und der Röhre sorgt, die in diese Durchführung eingesteckt ist.

10. System nach einem der Ansprüche 1 bis 9, wobei die Durchführungen (1, 1') der axialen Leiter (5, 5') jeweils eine Abstützfläche für das abgeflachte Ende der Isolierhülse (12) aufweisen, die kreisförmig und eben oder konisch ist.

11. System nach einem der vorangehenden Ansprüche 1 bis 10, wobei ein ringförmiger Stromwandler (17) um die Isolierhülse (12) herum montiert ist.
